# EUROPEAN PATENT SPECIFICATION

(11) **EP 2 848 082 B1**
(45) Date of publication and mention of the grant of the patent: **08.05.2019**
(21) Application number: 13717339.9
(22) Date of filing: 15.03.2013
(51) Int. Cl.: H04W 76/28

(54) **EXTENDED SEMI-PERSISTENT SCHEDULING (SPS) CONFIGURATION FLEXIBILITY FOR INFREQUENT DENSE RESOURCE ALLOCATIONS**
ERWEITERTE SPS-KONFIGURATIONSFLEXIBILITÄT FÜR SELTENE DICHTE RESSOURCENZUWEISUNGEN
CONFIGURATION MODULABLE DE PLANIFICATION SEMI-PERSISTANTE (SPS) ÉTENDUE, POUR DES ALLOCATIONS DE RESSOURCES DENSES MAIS PEU FRÉQUENTES

(30) Priority: 11.05.2012 US 201261645958 P
(43) Date of publication of application: 18.03.2015
(73) Proprietor: Telefonaktiebolaget LM Ericsson (publ), 164 83 Stockholm (SE)
(72) Inventor: RUNE, Johan, S-18129 Lidingö (SE); ERIKSSON, Erik, S-585 93 Linköping (SE)
(74) Representative: Zacco Sweden AB
(86) International application number: PCT/SE2013/050272
(87) International publication number: WO 2013/169173

(56) References cited:
- EP-A1- 2 028 781
- US-A1- 2010 074 206
- US-A1- 2010 150 091
- US-A1- 2010 172 313
- US-A1- 2011 164 583

## Description

### FIELD OF THE INVENTION

The present disclosure relates generally to scheduling in a communications system, and more particularly, to systems and methods for performing infrequent dense resource allocations.

### BACKGROUND

There is a currently popular vision for the future development of cellular communication networks that involves very large numbers of relatively small autonomous devices. In these visions, these devices are becoming increasingly important and are not assumed to be associated with humans (e.g., cellular telephones). Rather, such devices may also comprise devices not associated with humans, such as different sensors or actuators that communicate with application servers within or outside the cellular network. Although not required, these servers are typically the same servers that configure these devices and receive data from them. Hence, this type of communication is often referred to as machine-to-machine (M2M) communication, and the devices performing the M2M communications are typically referred to as machine devices (MDs). In the Third Generation Partnership Project (3GPP) standardization, the corresponding alternative terms are machine type communication (MTC) and machine type communication (MTC) devices, with MTC devices comprising a subset of the more general term user equipment (UE).

In general, the number of MTC devices will usually exceed the number of human users in the network. However, many MTC devices are not expected to communicate as often as the user devices. Therefore, the traffic volume associated with MTC devices operating in the network will likely be much less than the traffic volume associated with the "user" population.

Often times, external power supplies are not likely to be available since the frequent replacing or recharging the batteries of MTC devices is neither practical nor economically feasible. Therefore, due to the nature of MTC devices and their assumed typical uses, it follows that MTC devices will often have to be very energy efficient. For such energy deprived devices, the traffic is characterized by small, infrequent transactions. Such traffic is often delay tolerant, but results in large signaling overhead. Hence, the reduction of signaling overhead is an important consideration when facilitating the efficient functioning of MTC devices using a cellular network. Additionally, such reductions help to ensure a long battery life for these devices.

As those of ordinary skill in the art will readily appreciate, conventional systems utilize different mechanisms to help ensure that end user devices, such as UEs, for example, judiciously utilize their battery resources. One such mechanism currently employed in cellular networks to save energy in the UEs is known as discontinuous reception (DRX). With DRX, a UE is able to remain in an energy-saving sleep state or sleep mode for most of the time, while "waking-up" from time-to-time to listen for pages in an idle mode, or to listen for downlink resource assignments (i.e., downlink transmissions) in a connected mode. Further, to make the DRX mechanism even more effective for energy deprived MTC devices, the maximum DRX cycle length, and therefore, the sleep period, can be extended. Thus, a DRX cycle essentially consists of a repeating cycle of a sleep period followed by an active period that is typically, but not necessarily, shorter. As those skilled in the art will readily appreciate, DRX cycles need not be as simplistic as described in the foregoing example, but instead, may have a more complex structure. For example, the active period of the DRX cycle may be dynamically extended for a given UE.

Another suggested energy saving mechanism proactively allocates uplink resources via semi-persistent scheduling (SPS), which was designed for scenarios where communications consist of regularly repeated transmissions of data chunks of more or less well-known type and size. Particularly, SPS helps to reduce control channel signaling. With SPS, an ongoing (i.e., repetitive) resource allocation on the uplink (or the downlink) is set-up. This resource allocation persists until it is changed. The SPS mechanism helps reduce energy consumption in the UE in conjunction with uplink resource allocation, and thus, uplink transmission, for energy deprived UEs (i.e., typically MTC devices). By way of example, consider an application such as voice over IP (VoIP) in which a frame on the downlink, and similarly on the uplink, occurs every 10 to 20 milliseconds. If each uplink and downlink frame were signaled individually, it would cause a lot of traffic on the control channel thereby causing the control channel to require much more bandwidth than necessary. Additionally, the monitoring and reception of the control channel consumes energy in the UE.

Semi-persistent scheduling may be configured in advance for a UE using Radio Resource Control (RRC) signaling. For example, via the SPS-Config IE in the radioResourceConfigDedicated IE using a RRCConnectionSetup message or an RRCConnectionReconfiguration message. The SPS configuration comprises allocating a UE-specific SPS Cell Network Temporary Identifier (i.e. SPS-C-RNTI) and a repetition interval (i.e., for the uplink and/or the downlink) for the resources to be allocated through SPS. The actual allocation of the repetitive SPS resources consists of a downlink scheduling assignment for downlink SPS, or an uplink grant (i.e. an uplink resource allocation) on the Physical Downlink Control Channel (PDCCH) with the contents of a one-time allocation; however, the allocation is addressed to the SPS-C-RNTI of the specific UE. This activating uplink grant specifies the resources (i.e. the resource blocks in the frequency domain and/or the Modulation and Coding Scheme (MCS) configuration) that are to be used for the repetitive SPS resources. Thereafter, subsequent uplink grants addressed to the same SPS-C-RNTI of the specific UE will override the previous allocation of resource blocks and MCS configuration.

The repetitive resources allocated through SPS may be explicitly released through PDCCH signaling by addressing another uplink grant to the same SPS-C-RNTI. However, this subsequent SPS uplink grant includes dummy parameter values to indicate the release of the SPS resources. Particularly, when a UE has no uplink data to transmit in an uplink resource allocated through SPS, the UE is mandated to send a Buffer Status Report (BSR). An activated uplink SPS resource is released if a BSR indicating an empty buffer is sent for a configurable, predetermined number of consecutive uplink transmissions.

Another method used to reduce signaling, and thereby reduce battery drain at the MTC devices, uses Transmission Time Interval (TTI). TTI bundling was introduced in LTE to extend the coverage and improve uplink cell edge performance for VoIP, and is currently specified only for uplink transmission. However, there is nothing that prevents TTI bundling from being used for other purposes as well. TTI bundling, as currently specified, allows for the bundling of four TTIs. This means that the UE transmits four redundant versions of the same data in four consecutive sub-frames without waiting for intermediate Hybrid Automatic Repeat reQuest (HARQ) feedback. However, the HARQ feedback is provided only in response to the entire bundle. Thus, not only does TTI bundling increase the chances that a transmission is correctly decoded at the receiver before the first HARQ feedback, but TTI bundling may, in essence, be viewed as "proactive HARQ retransmissions" (i.e. a form of extra robust coding).

Although useful, the previously described techniques can be problematic. Particularly, the SPS and DRX functions may not interact well with each other, and in some cases, may conflict with each other, especially when SPS is proactively allocated to energy deprived devices. Typically a UE using both SPS and DRX would be configured with synchronized DRX cycles and SPS intervals. With such synchronization, one SPS allocation occurs every DRX active period. As previously stated, the type and size of the data to be transmitted in the SPS resource is typically known beforehand for regular SPS transmissions, such as VoIP samples, for example, which facilitates the allocation of appropriately sized resources.

With proactive SPS allocations, the situation is somewhat different because the SPS allocations are intended for more generic uses. That is, the purpose for the proactive SPS allocations is still to save energy, but without necessarily knowing what kind of, and how much, data that will be transmitted. Indeed, there may be situations in which the UE may not have any data to transmit for an SPS uplink allocation, or situations where the base station does not have any data to transmit to the UE for an SPS downlink allocation. In other situations, however, the UE or the base station may have variable amounts of data for transmission. Even in situations where the targeted energy deprived MTC devices communicate mostly small amounts of data, there are situations when a single occurrence of the proactively allocated resources may not suffice for transmission of all queued data.

The risk of such situations happening increases markedly if the bandwidth reduction feature for low complexity and/or low power MTC devices currently defined in 3GPP is used. In such cases, the MTC device may only be able to handle a bandwidth of 1.4 MHz, which severely decreases the capacity and the amount of data that may be transferred in a single sub-frame. Additionally, the MTC device is unlikely to support Multiple Input Multiple Output (MIMO), or the highest order modulation and coding schemes (MCS), which also limits the data transfer capacity of the MTC device. Further, if the MTC device also happens to be in a situation with poor channel quality, or is statically located in a locations where the channel quality is poor, the data transfer capacity of a single SPS resource (i.e. one sub-frame) may be inadequate with which to handle the communication needs.

Generally, the eNodeB (eNB) may handle such situations by using regular resource allocation mechanisms to allocate more downlink or uplink transmission resources, depending on the direction of the queued data. In the uplink case, the eNB first has to read the Buffer Status Report (BSR) that the UE/MTC device includes in its uplink transmission, if the queue is not emptied. This processing, however, can add a significant amount of scheduling delay (i.e., the processing in the eNB plus 4 ms from the uplink resource allocation to the allocated resource). Such delays can be significantly problematic, especially if the eNB does not correctly receive the first transmission from the UE/MTC device, and therefore, requires HARQ retransmissions. More specifically, HARQ retransmissions would add another 8 ms round-trip-time (RTT) for each HARQ cycle, thereby adding to the time needed by the eNB to decode the data including the BSR. Such a delay prolongs the DRX active period because the UE/MTC device has to monitor the PDCCH in every sub-frame while in DRX active mode. However, from an energy savings perspective, prolonging the DRX active period is disadvantageous.

Alternatively, instead of scheduling additional uplink resources, the eNB may rely on the existing SPS allocations. This means that a UE/MTC device may require two or more SPS resource allocations (i.e. transmission occasions) to send or receive all queued data. Since the DRX cycle may be rather long, or very long with extended DRX, undesirably and unacceptably long delays may result from the UE/MTC device not being able to convey all queued data.

Shrinking this delay by simply configuring a very short uplink SPS interval would also be suboptimal. Such a practice would unnecessarily tie-up the uplink transmission resources during the DRX inactive period because a UE may transmit even when it is in DRX inactive mode. There is also a risk that a UE implementation chooses to honor the SPS configuration before the DRX configuration, and thus, will wake up during a DRX inactive period to receive data in allocated SPS downlink resources. This could create a conflict between the SPS and DRX configurations. A method combining semi-persistent resource allocation and DRX is disclosed in document EP 2028781 A1.

### SUMMARY

The present invention is defined by independent claims 1, 7, 11, 12 and 15, respectively. Embodiments of the present disclosure provide a modified semi-persistent scheduling (SPS) mechanism that extends the configuration possibilities for the SPS mechanism. More particularly, the embodiments of the present disclosure increase the flexibility of the SPS mechanism, thereby improving its interaction with Discontinuous Reception (DRX) functionality at a User Equipment (UE) and/or Machine Type Communication (MTC) device. This reduces the risk of a given UE/MTC device not having sufficiently allocated SPS resources to be able to transmit all queued uplink data during a DRX active period, while avoiding the processing delays that are associated with the regular allocation of additional transmission resources by the eNodeB (eNB).

To extend the SPS configuration possibilities, the embodiments of the present disclosure modify the SPS mechanism to make available multiple uplink SPS allocations. Specifically, the embodiments temporally separate the SPS allocations during a DRX active period using short time gaps, or no time gaps at all (i.e., SPS allocations are provided in consecutive sub-frames). These extended configuration possibilities allow for a dense SPS resource allocation, and thus, the UE/MTC devices can achieve a desired resource allocation behavior. Additionally, they avoid conflict between the SPS and DRX features at the UE/MTC device, as well as the consequent potential resource waste. Modifying the SPS mechanism according to embodiments of the present disclosure also avoids the scheduling delays that are associated with the regular resource allocation procedure, and reduces the risk of undesirably prolonging a DRX active period.

In one embodiment, the present disclosure provides two SPS cycles - a short cycle and a long cycle. The short cycle defines a repetition interval of the SPS resource allocations. The long cycle defines when the short cycle should be active. In this embodiment, the present disclosure "matches" or synchronizes the long SPS cycle with the DRX cycle, both in terms of the length and duty cycle, to sufficiently allocate the UE/MTC device with SPS resources.

In another embodiment, the SPS configuration is extended to enable multiple parallel SPS configurations. Particularly, multiple parallel SPS configurations are established, and all are synchronized with the DRX cycle such that they have the same cycle length. All SPS resource allocations occur in the DRX active periods; however, each of the multiple SPS configurations are time-shifted relative to each other using different offsets.

In another embodiment, the SPS configuration is extended to include a bundling indicator that indicates whether a configured SPS allocation should employ Transmission Time Interval (TTI) bundling over a number of TTIs. The number of TTIs to bundle may be selected, for example, from a set of preconfigured numbers of TTIs to be bundled. Each SPS allocation is then bundled over multiple TTIs with one codeword spreading over the entire bundle. This embodiment allows for more effective coding of smaller allocations. As an alternative, each TTI (i.e. subframe) may be used as a separate resource, i.e. with one codeword for each TTI.

In another embodiment, the SPS configuration is extended to explicitly indicate the interaction with DRX functionality at the UE/MTC device. This allows an eNB to indicate whether the SPS resource allocations should be suspended during DRX inactive periods, or whether the SPS resource allocations should override a current DRX configuration. The same result may be achieved via a similar extension of the DRX configuration possibilities. The SPS repetition interval is then configured such that it is shorter than half the DRX active period, in order to fit multiple SPS allocations within each DRX active period.

Further, in one embodiment, a method is provided for configuring Semi-Persistent Scheduling (SPS) resources to a wireless device in a wireless communication network. The method is performed at a base station and comprises generating configuration information for SPS resource allocation, wherein the configuration information configures a set of multiple SPS resources to reoccur within a reoccurring first time interval of the wireless device, but does not configure SPS resources to occur in a reoccurring second time interval of the wireless device, and signaling the configuration information to the wireless device.

In one embodiment, the first time interval is shorter than the second time interval, and the configuration information may indicate multiple SPS cycles. The SPS cycles may include a first cycle defining a period over which the set of SPS resources reoccurs, and that is configured so that each reoccurring set of SPS resources occurs within the first time interval device, and a second cycle defining a period over which the SPS resources reoccur in the set.

In one embodiment, the first time interval comprises a Discontinuous Reception (DRX) active period of the wireless device, and wherein the second time interval comprises a DRX inactive period of the wireless device.

In another embodiment, the configuration information is addressed to a single identifier allocated to the wireless device for SPS resource allocation, or to multiple identifiers allocated to the wireless device. In the latter case, the configuration information addressed to different identifiers configures different SPS resources within the set of SPS resources.

In one embodiment, the configuration information indicates a SPS cycle defining a period over which the SPS resources reoccur, and indicates that the SPS resources are selectively suspended within the DRX inactive period of the wireless device.

In one embodiment, the SPS resources are clustered. In such cases, the configuration information indicates that one or more codewords are to be transmitted over the set of SPS resources. Additionally, in one embodiment, the configuration information indicates that the one or more codewords are to be transmitted over the set of all SPS resources.

In one embodiment, the SPS resources within the set of SPS resources are time-shifted with respect to each other.

Embodiments of the present disclosure also provide a base station. The base station has a communication interface configured to communicate data with one or more wireless devices in the wireless communication network, and a controller. In one embodiment, the controller is configured to generate configuration information for SPS resource allocation. The configuration information configures a set of multiple SPS resources to reoccur within a first time interval of the wireless device, but does not configure SPS resources to occur in a second time interval of the wireless device. The base station also signals the configuration information to the wireless device.

In one embodiment, the first time interval is shorter than the second time interval.

In one embodiment, the configuration information indicates multiple SPS cycles including a first cycle and a second cycle. The first cycle defines a period over which the set of SPS resources reoccurs, and the period aligns with the first time interval of the wireless device. The second cycle defines a period over which the SPS resources reoccur in the set.

In at least one embodiment, the first time interval comprises a Discontinuous Reception (DRX) active period of the wireless device, and the second time interval comprises a DRX inactive period of the wireless device.

In one embodiment, the configuration information is addressed to a single identifier allocated to the wireless device for SPS resource allocation. In another embodiment, the configuration is addressed to multiple identifiers allocated to the wireless device. In this latter case, the configuration information addressed to different identifiers configures different SPS resources within the set of SPS resources.

In one embodiment, the configuration information indicates a SPS cycle defining a period over which the SPS resources reoccur, and indicates that the SPS resources are selectively suspended within the DRX inactive period of the wireless device.

In one embodiment, the SPS resources are clustered, and the configuration information indicates that one or more codewords are to be transmitted over the set of SPS resources. In other cases, the configuration information indicates that the one or more codewords are to be transmitted over the set of all SPS resources.

In one embodiment, the SPS resources within the set of SPS resources are time-shifted with respect to each other.

In addition to the above, embodiments of the present disclosure also provides a method for receiving data over Semi-Persistent Scheduling (SPS) resources in a wireless communication network. In one embodiment, the method is performed at a wireless device and comprises receiving configuration information for SPS resource allocation, wherein the configuration information configures a set of multiple SPS resources to reoccur within a first time interval of the wireless device, but does not configure SPS resources to occur in a second time interval of the wireless device. Additionally, the method further comprises configuring the wireless device to receive or transmit data over the set of SPS resources according to the configuration information.

In one embodiment, the first time interval is shorter than the second time interval.

In one embodiment, the configuration information indicates multiple SPS cycles including a first cycle and a second cycle. The first cycle defines a period over which the set of SPS resources reoccurs. The period aligns with the first time interval of the wireless device. The second cycle defines a period over which the SPS resources reoccur in the set.

In one embodiment, the first time interval comprises a Discontinuous Reception (DRX) active period of the wireless device, and the second time interval comprises a DRX inactive period of the wireless device.

In one embodiment, the configuration information is addressed to a single identifier allocated to the wireless device for SPS resource allocation. In other embodiments, however, the configuration is addressed to multiple identifiers allocated to the wireless device. The configuration information that is addressed to different identifiers configures different SPS resources within the set of SPS resources.

The configuration information may, in one embodiment, comprise a SPS cycle that defines a period over which the SPS resources reoccur, and indicate that the SPS resources are selectively suspended within the DRX inactive period of the wireless device.

In one embodiment, the SPS resources are clustered, and the configuration information indicates that one or more codewords are to be transmitted over the set of SPS resources. In another embodiment, the configuration information indicates that the one or more codewords are to be transmitted over the set of all SPS resources.

In one embodiment, the set of SPS resources are time-shifted with respect to each other.

In addition, the present disclosure also provides a wireless device comprising a transceiver and a controller. The transceiver receives configuration information for SPS resource allocation from a base station. In one embodiment, the configuration information configures a set of multiple SPS resources to reoccur within a first time interval of the wireless device, but does not configure SPS resources to occur in a second time interval of the wireless device. Upon receiving the information, the controller configures the wireless device to receive or transmit data over the set of SPS resources according to the configuration information.

In one embodiment, the first time interval is shorter than the second time interval.

In one embodiment, the configuration information indicates multiple SPS cycles including a first cycle and a second cycle. The first cycle defines a period over which the set of SPS resources reoccurs, in which the period aligns with the first time interval of the wireless device. The second cycle defines a period over which the SPS resources reoccur in the set.

In one or more embodiments, the first time interval comprises a Discontinuous Reception (DRX) active period of the wireless device, and wherein the second time interval comprises a DRX inactive period of the wireless device.

Additionally, in one embodiment, configuration information is addressed to a single identifier allocated to the wireless device for SPS resource allocation. However in other embodiments, the configuration is addressed to multiple identifiers allocated to the wireless device. In such latter embodiments, the configuration information addressed to different identifiers configures different SPS resources within the set of SPS resources.

In one embodiment, the configuration information indicates a SPS cycle defining a period over which the SPS resources reoccur, and indicates that the SPS resources are selectively suspended within the DRX inactive period of the wireless device.

In another embodiment, the SPS resources are clustered. In such embodiments, the configuration information indicates that one or more codewords are to be transmitted over the set of SPS resources. Additionally, the configuration information may indicate that the one or more codewords are to be transmitted over the set of all SPS resources.

In one embodiment, the SPS resources within the set of SPS resources are time-shifted with respect to each other.

The embodiments provide benefits and advantages not realized using conventional systems and methods. For example, the embodiments of the present disclosure enable dense SPS allocations during a DRX active period in order to allow data to be swiftly communicated from or to a UE within a short DRX active period without sacrificing energy efficiency. In fact, with the method of the embodiments, the UE is able to preserve more of its energy resources for a longer period of time. The embodiments of the present disclosure also enable the efficient and conflict-free co-existence of proactive SPS resource allocations and DRX (i.e., without causing conflicts between SPS and DRX configurations and without wasting resources during DRX inactive periods). The embodiments of the present disclosure also allows for the adaptation of the proactive SPS resource allocations, in conjunction with connected mode DRX, to the uncertain nature of the data transmission for which they are intended.

Of course, those skilled in the art will appreciate that the present disclosure is not limited to the above contexts or examples, and will recognize additional features and advantages upon reading the following detailed description and upon viewing the accompanying drawings.

### BRIEF DESCRIPTION OF THE DRAWINGS

Figure 1 is a functional block diagram illustrating a Long Term Evolution (LTE) network.
Figure 2 illustrates a long cycle (C) and a short cycle (c), as well as the relation between the long and short cycles according to one embodiment of the present disclosure.
Figure 3 illustrates the long and short SPS cycles synchronized with a DRX cycle according to one embodiment of the present disclosure.
Figure 4 illustrates the synchronization of a DRX configuration and multiple SPS configurations temporally separated by an offset according to one embodiment of the present disclosure.
Figure 5 illustrates the DRX cycle and the SPS cycle when the SPS resources are extended via TTI bundling according to one embodiment of the present disclosure.
Figure 6 illustrates the relation between the SPS resource allocations and the DRX cycle when the SPS resources are suspended during DRX inactive periods according to one embodiment of the present disclosure.
Figure 7 is a functional block diagram illustrating some components of a User Equipment (UE) configured according to one embodiment of the present disclosure.
Figure 8 is a functional block diagram illustrating an eNodeB configured according to one embodiment of the present disclosure.
Figure 9 is a flow chart illustrating a method, performed at a base station, of configuring Semi-Persistent Scheduling (SPS) resources to a wireless device in a wireless communication network according to one embodiment of the present disclosure.
Figure 10 is a flow chart illustrating a method, performed at a base station, of configuring Semi-Persistent Scheduling (SPS) resources to a wireless device in a wireless communication network according to another embodiment of the present disclosure.
Figure 11 is a flow chart illustrating a method, performed at a base station, of configuring Semi-Persistent Scheduling (SPS) resources to a wireless device in a wireless communication network according to one embodiment of the present disclosure.
Figure 12 is a flow chart illustrating a method, performed at a wireless device, for receiving data over Semi-Persistent Scheduling (SPS) resources in a wireless communication network.

### DETAILED DESCRIPTION

The embodiments of the present disclosure extend the SPS configuration possibilities thereby increasing the flexibility of the SPS mechanism. More particularly, the embodiments provide multiple SPS allocations that are separated by short time gaps, or by no time gaps at all (i.e. SPS allocations in consecutive sub-frames), during a DRX active period. For a UE/MTC, this reduces the risk of not having sufficiently allocated SPS resources to be able to transmit all queued uplink data during a DRX active period, while avoiding the processing delays that are typically associated with the normal allocation of additional transmission resources by an eNB. The novel SPS configuration abilities can be applied both in the uplink and in the downlink, but the description of the embodiments of the present disclosure focuses on the uplink, because that is where the greatest benefits are achieved.

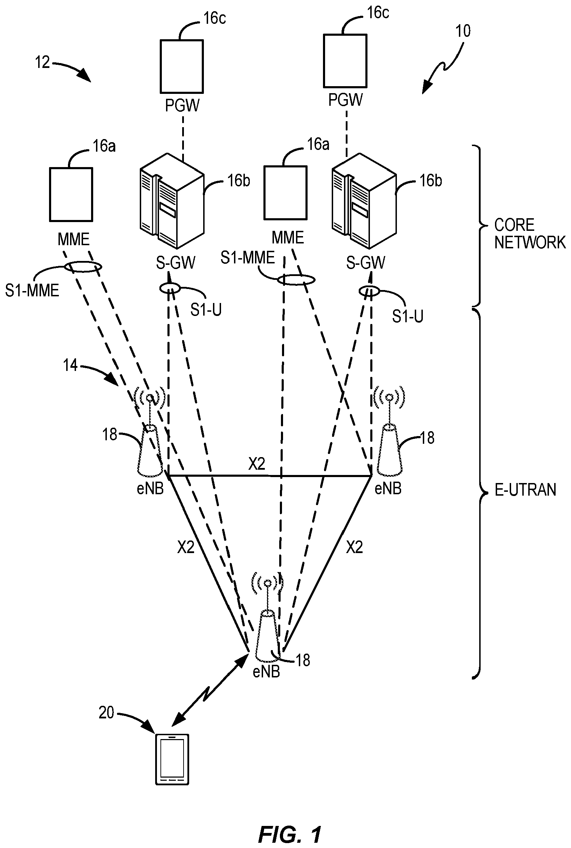

Turning now to the figures, a representative example of a modern wireless communication network standard suitable for use in one or more embodiments of the present disclosure is the Long Term Evolution (LTE), defined by the 3^{rd} Generation Partnership Project (3GPP). As seen in Figure 1, a LTE network 10, includes a core network 12 (i.e., the evolved packet core) and a Radio Access Network 14 (i.e., the Evolved Universal Terrestrial Radio Access Network, or E-UTRAN). The evolved packet core network 12 comprises a plurality of nodes including those having the functionality of a Mobile Management Entity (MME) 16a, a Serving Gateway (S-GW/SGW) 16b, and a Packet Data Network Gateway (PGW) 16c (collectively, 16). The E-UTRAN nodes include evolved NodeB's (eNB) 18 that communicatively connect to each other over the logical X2 interface and to the MME and SGW nodes 16 over the logical S1 interface. The S1 interface is divided into a control plane part, S1-MME, between the eNB and the MME and a user plane part, S1-U, between the eNB and the SGW. Additionally, the eNBs 18 also communicate with one or more user terminals, illustrated in Figure 1 as User Equipment (UE) 20, over a radio interface, also known as an air interface, to provide the UEs 20 with access to the evolved packet core network 12.

It should be noted that the present embodiments are described in terms of operation in an Evolved Packet System/Long Term Evolution (EPS/LTE) network. However, those of ordinary skill in the art will readily appreciate that the general concepts of the present disclosure, as well as the following embodiments, are also applicable to other types of communications networks including, but not limited to, Universal Mobile Telecommunications System (UMTS) networks, Wideband Code Division Multiple Access (WCDMA) networks, and High Speed Packet Access (HSPA) networks.

Additionally, the present embodiments describe the disclosure as if it primarily targets UEs. However, this, too, is for illustrative purposes only. One or more embodiments of the present disclosure may be utilized in conjunction with any end user device, including, but not limited to, MTC devices, a sensor, or a user's cellular telephone, for example. Therefore, for clarity, the term "UE" is used throughout the specification, and is intended to encompass all such end user devices.

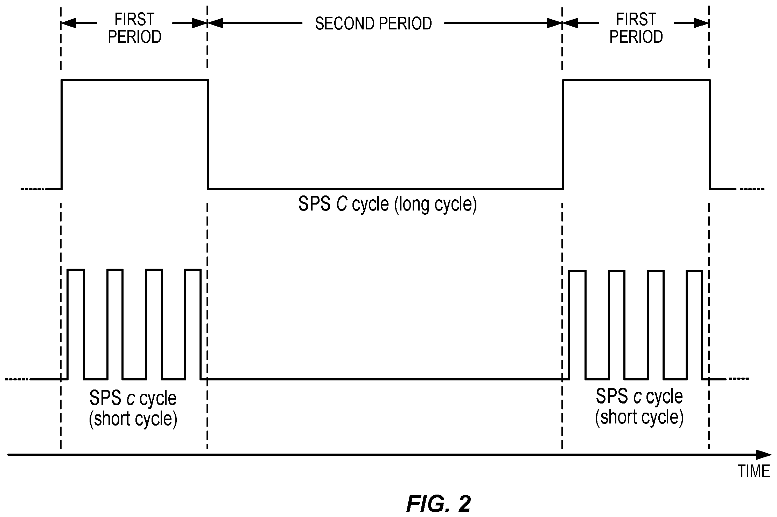

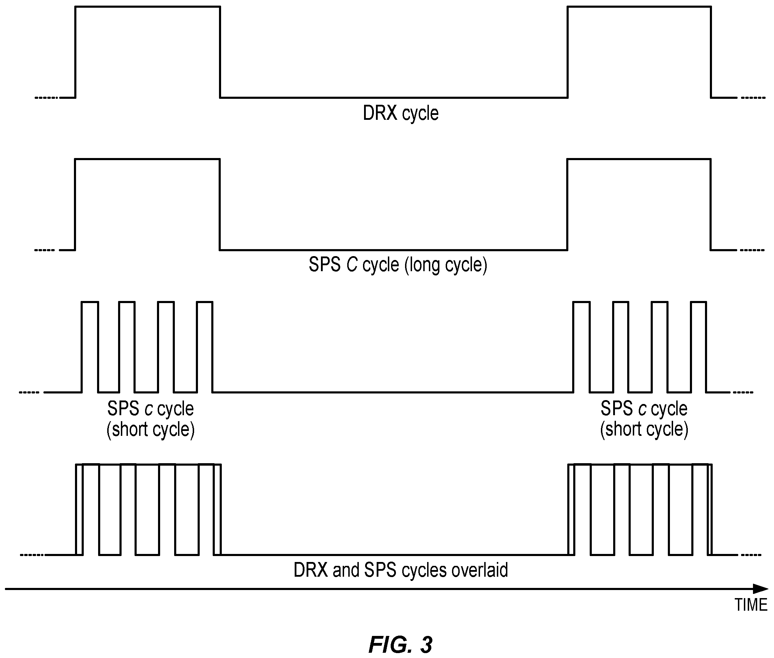

As stated above, the embodiments of the present disclosure provide various configuration possibilities for the SPS mechanism. Figures 2-3, for example, illustrates one such embodiment in which the SPS configuration possibilities are extended to utilize two interacting cycles for the same SPS-C-RNTI.

Particularly, as seen in Figure 2, the SPS configuration in this embodiment includes a long cycle C, and a short cycle c. The long cycle C is divided into first and second periods. During the first period, no transmission resources are allocated. During the second period, the short cycle c is used to define the resource allocation occasions. The short cycle c is hence used as a normal SPS configuration to define repetitive allocations of transmission resources during the second period of each long cycle C. However, during the first period of each long cycle C, the short cycle c is not used at all.

To optimize the resource management, while avoiding configuration conflicts and undesired resource allocations, the long and short SPS cycles C and c should be synchronized with the DRX cycle in terms of both length and duty cycle, such that the first period of the long cycle C coincides with the DRX inactive period (i.e., the sleep period), and the second period of long cycle C coincides with the DRX active period. With this synchronization, the SPS resource allocations occur only during the DRX active periods. Therefore, multiple dense resource allocations (i.e. resource allocations in multiple sub-frames) can be performed during a single DRX active period without causing a conflict with the DRX configuration and unnecessarily tying up uplink transmission resources during the DRX inactive periods.

The "dual-cycle SPS configuration" seen in Figures 2-3 may be provided to the UE using any means known in the art. In one preferred embodiment, however, the dual-cycle configuration is conveyed to the UE in the SPS-Config Information Element (IE). The SPS-Config IE may be conveyed to the UE in a RadioResourceConfigDedicated IE of the RRCConnectionSetup message, or in an RRCConnectionReconfiguration message, for example.

The decision to establish a dual-cycle configuration may be based on any desired factor(s). However, in one embodiment, the decision is based on a UE category, such as "Energy Deprived UE," for example. In other embodiments, the decision may be based on subscription data, which is stored in the Home Subscriber Server (HSS) and forwarded to the eNB via the Mobility Management Entity (MME), or on an indication from the UE in an RRCConnectionSetupComplete or RRCConnectionRequest message, for example. If subscription data is used as the basis for deciding to establish a dual-cycle configuration, the Subscriber Profile Identifier (SPID) may be used. Particularly, the MME may forward the relevant subscription data to the eNB in the SPID for Radio Access Technology (RAT)/Frequency priority IE in an S1 Application Protocol (S1AP) INITIAL CONTEXT SETUP REQUEST message. An alternative could be that the UE indicates the subscription data to the MME as a capability (or classmark) in a Non Access Stratum (NAS) message, such as an Attach Request message, for example. The MME could then forward the information to the eNB in the S1AP INITIAL CONTEXT SETUP REQUEST message.

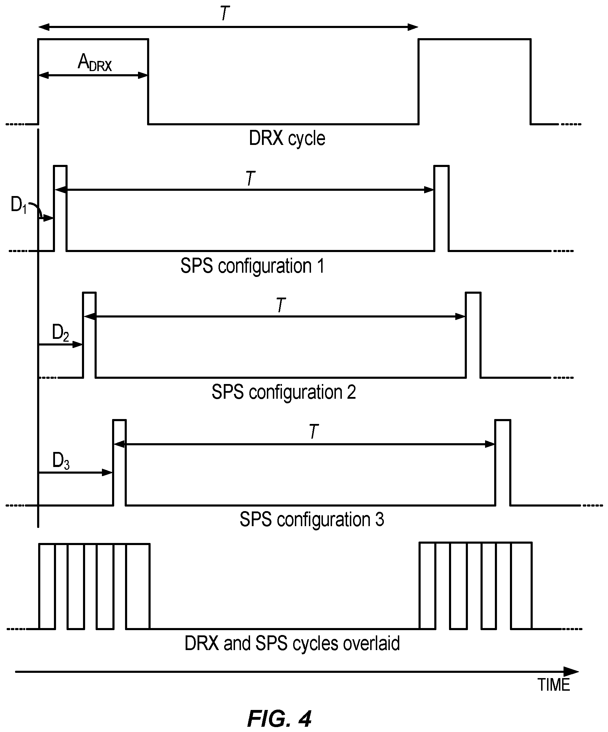

Figure 4 illustrates the relationship between multiple SPS configurations and a DRX cycle in another embodiment of the disclosure. This embodiment does not modify the current form and structure of the SPS configuration *per se,* but rather, achieves the desired properties by introducing multiple, temporally offset parallel SPS configurations.

More specifically, as previously described, SPS is configured in advance and triggered by an uplink grant (or downlink scheduling assignment) addressed to the SPS-C-RNTI of a given UE. The method of this embodiment introduces the possibility to allocate multiple SPS-C-RNTIs to the same UE, and associate a different SPS configuration with each allocated SPS-C-RNTI. Each of the multiple SPS configurations may be independent of each other, with the exception that the SPS configurations may not allocate the same or overlapping resources. Further, the SPS configurations may also be connected such that one SPS configuration is defined as an offset relative to another SPS configuration. Generally, this offset may be in either the time domain (e.g., an offset in terms of number of sub-frames), or the frequency domain, or both, such as in the case of dual offsets. Of most interest in the scenarios considered for embodiments of the present disclosure is the option of using an offset in the time domain.

To achieve multiple SPS resource allocations with the desired different time domain offsets, an eNB may configure multiple parallel SPS configurations (i.e., N parallel SPS configurations) for a given UE. Each of the N SPS configurations is associated with a unique SPS-C-RNTI, and all the SPS configurations have the same repetition interval *T*, but with different offsets in the time domain (e.g. *D₁* = 0, *D₂* > *D₁,* ... *D_{N}* > *D_{N-1}*). The reference for the offsets D may be arbitrarily chosen. Further, the eNB configures the UE with a DRX cycle that is synchronized with the SPS configurations, such that all the SPS resource allocations occur during the DRX active periods. To achieve this, the eNB sets the repetition interval *T* equal to the length of the DRX cycle, and selects the offsets such that all SPS resource allocations occur in the DRX active period in each cycle. Therefore, as seen in Figure 4, the maximum spread range of the SPS resource allocations *D_{N-1}* + *t* - *D₀*, where *t* represents the time length of a resource allocation, i.e. a one millisecond subframe in LTE, must not exceed the length of a DRX active period *A_{DRX},* and thus, *D_{N-1}* + *t* - *D₀* ≤ *A_{DRX}*.

Such multiple parallel SPS configurations may be performed using any means known in the art. In one LTE-based embodiment, for example, multiple SPS-Config lEs are enabled in the RadioResourceConfigDedicated IE, and are preferably conveyed to the UE in either a RRCConnectionSetup message or an RRCConnectionReconfiguration message. However, in an alternative embodiment, the SPS-Config IE is made to be a sequence of its current content. The basis for deciding to establish such a multiple parallel SPS configuration may be the same as previously described.

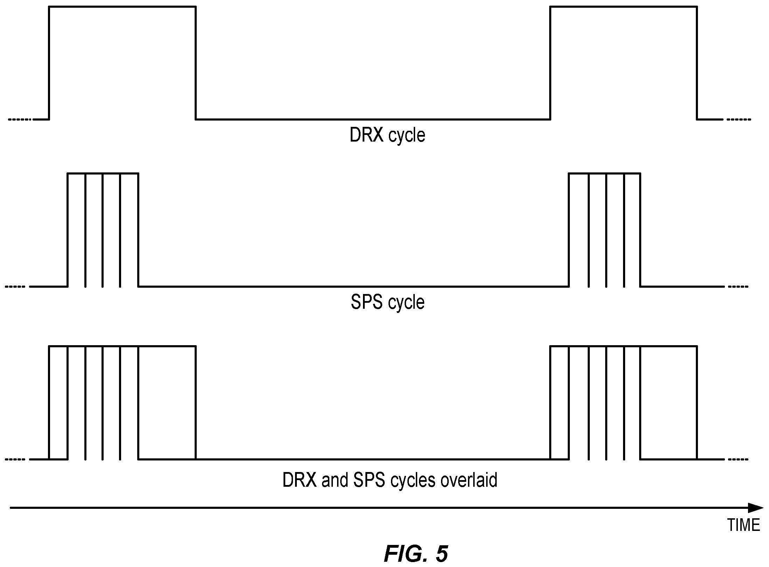

Figure 5 illustrates an embodiment of the present disclosure in which clustered, semi-persistently allocated resources are achieved by allocating multiple consecutive or distributed sub-frames where joint coding is applied over the assigned resource. This can be achieved, for example, through redundancy version handling, such as is performed for TTI bundling in which the redundancy version is updated for each sub-frame, or by viewing the entire bundled resource as a single TTI. In the latter case, the transmitted data is coded as one codeword spreading over the entire resource bundle, and has the benefit of providing a more effective coding for smaller resource allocations or smaller amounts of transmitted data. The number of bundled TTIs and possible mapping schemes could be signaled by RRC signaling, for example, and tied to the SPS configuration, such as by extending the SPS-Config IE. As previously mentioned, the SPS-Config IE may be conveyed to the UE in the RadioResourceConfigDedicated IE of the RRCConnectionSetup message, or an RRCConnectionReconfiguration message. A parameter in the SPS-Config IE could, for instance, comprise a value selected from a set of preconfigured numbers of TTIs to be bundled (e.g. 2, 3, 4 or 6 TTIs) indicating which of the TTIs is to be bundled. The number of bundled TTIs could also be signaled dynamically using multiple uplink grants.

By including TTI bundling, a larger amount of uplink data can be sent for the semi-persistently assigned resource that is typically not time critical, or the coverage of more time critical services such as VoIP, for example, may be enhanced, while dynamic per-TTI scheduling can be applied for other transmissions. This may, for example, suit some MTC applications. As an alternative to spreading one codeword over the entire resource bundle, each TTI (i.e. subframe) may be used as a separate resource, i.e. with one codeword for each TTI.

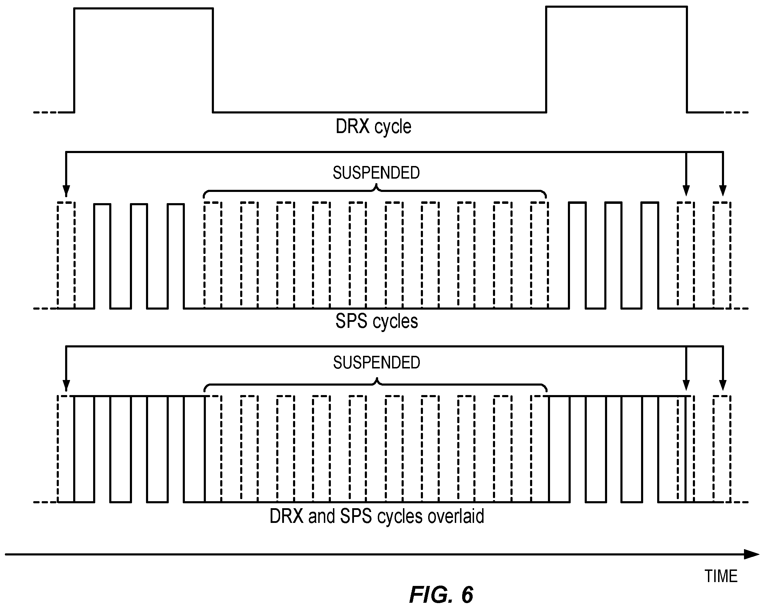

Figure 6 illustrates an embodiment in which the SPS configuration and DRX configuration are essentially left undisturbed, but are also redefined so that any potential "conflicts" between the two are explicitly resolved. The embodiment enables the use of an SPS interval that is much shorter than the DRX cycle, and allows the eNB to configure the UE with the resources as desired without "tying-up" the uplink resources during DRX inactive periods and without risking that the UE "wakes-up" from DRX inactive mode to receive data in allocated SPS downlink resources.

This modification, or redefinition, may be applied to either the SPS configuration or the DRX configuration. In the former case, the SPS configuration is complemented with an indication of how "conflicts" with DRX configuration should be handled. For example, the indication may comprise the value "suspend SPS during DRX inactive mode," meaning that no SPS resource allocations will be performed while the UE is in DRX inactive mode. Alternately, the value may comprise "override DRX inactive mode," meaning that SPS resource allocations will be performed even during periods, which according to the DRX configuration, should be spent in DRX inactive mode. With this latter indication the UE could wake up from DRX inactive mode to handle any resources allocated by SPS (i.e. transmit a BSR, for example, or receive data) in accordance with the SPS configuration. The indication of how to treat conflicts with DRX configuration is preferably included in the SPS-Config IE, which as previously mentioned, may be conveyed to the UE in the RadioResourceConfigDedicated IE of the RRCConnectionSetup message, or an RRCConnectionReconfiguration message.

If the modification or redefinition is applied to the DRX configuration instead, the DRX configuration is complemented with a similar indication. In this case, the indication may comprise the values "override SPS configuration", meaning that SPS resource allocations will be suspended while the UE is in DRX inactive mode, or "wake up for SPS resource allocations," meaning that SPS resource allocations will be performed and the UE should wake up from DRX inactive mode in order to handle them, as previously described. The indication of how to treat conflicts with SPS configuration is preferably included in a DRX-Config IE, which may be conveyed to the UE in a RadioResourceConfigDedicated IE of the RRCConnectionSetup message, or an RRCConnectionReconfiguration message, for example.

Optionally, the modification or redefinition may be applied to both the SPS configuration and the DRX configuration. In such cases, the respective indications are preferably consistent. Thus, if the indication in the SPS configuration comprises the value "suspend SPS during DRX inactive mode," the indication in the DRX configuration should be set to "override SPS configuration." Similarly, if the value of the indication in the SPS configuration comprises "override DRX inactive mode," the indication in the DRX configuration should be set to "wake up for SPS resource allocations."

With such functionality, an eNB may configure SPS and DRX functions such that multiple SPS resource allocations occur while the UE is in DRX active mode and still consider the corresponding resources during the DRX inactive period as being available for allocation to other UEs. Thus, if the SPS resource allocations are suspended while the UE is in DRX inactive mode, the eNB can consider these resources free for allocation to other UEs. Further, this embodiment also allows the eNB to instruct the UE to honor the SPS configuration before the DRX configuration, such that the UE wakes up from DRX inactive mode to handle SPS allocated resources. In either case, "conflicts" between SPS configuration and DRX configuration are explicitly resolved.

The eNB may achieve such conflict resolution by configuring a SPS repetition interval *T*, which is shorter than half the DRX active period (i.e., *T* ≤ 0.5 × *A_{DRX}*), and by setting the above described indication(s) to the desired value. Configuring a SPS repetition interval which is shorter than half the DRX active period ensures that at least two resource allocations will occur during a DRX active period. Alternatively, the eNB may also achieve conflict resolution using a SPS repetition interval that is longer than half a DRX active period, but shorter than a whole DRX active period (i.e., 0.5 × *A_{DRX}* < *T* < *A_{DRX}*), provided that the SPS repetition interval and offset are suitably matched with the DRX cycle length and duty cycle.

With the concept of dense SPS resource allocations during a DRX active period comes the risk that some or many of these resources are unused by the UE, and are therefore, excessive. However, one option used for freeing up such excessive uplink transmission resources could be to let BSRs received from the UE indicate whether further uplink SPS resources during the same DRX active period will be used. Thus, if a UE provides a BSR with the transmission in one of the SPS allocated uplink resources during a DRX active period indicating that no more uplink data is queued in the UE, then the eNB will consider any remaining SPS allocated uplink transmission resources during the same DRX active period (i.e. in the same "burst" of SPS allocated resources) free for allocation to other UEs, and the UE reporting the BSR will not be allowed to transmit in these resources regardless of whether the UE subsequently has new queued uplink data for transmission to the eNB.

The present disclosure may, of course, be carried out in other ways than those specifically set forth herein without departing from essential characteristics of the disclosure. For example, multiple SPS configurations may be used to allocate multiple parallel SPS resource allocations in which the same resource blocks in the same sub-frame are allocated to the same UE. In these cases, a different MCS may be associated with each such parallel SPS resource allocation. The UE selects which one of the SPS resource allocations (i.e., which MCS) to use for each uplink transmission and the eNB selects which SPS resource allocation (i.e., which MCS) to use for each downlink transmission. Such mechanisms may be combined with any of the embodiments described in this document.

Further, with such a combination, any of the preconfigured alternative MCS configurations could be applied to any of the SPS allocations during a DRX active period. Such a combination could provide additional flexibility in the use of the SPS allocated transmission resources. For example, a UE (or an eNB) may choose to use a robust MCS configuration and utilize all the SPS allocations during a DRX active period to convey the queued data. Alternatively, the UE (or eNB) may employ a more aggressive or less robust MCS configuration and convey the queued data using only a subset of the SPS allocations during a DRX active period. In some embodiments, it is possible to utilize rapid channel quality variations to change between different MCS configurations for different SPS allocations during the same DRX active period. For channel quality estimations the UE/eNB may for instance use any means known in the art for downlink measurements, HARQ feedback, and/or for MCS indications from the eNB.

A possible variation of such a combination is that a separate MCS configuration, or a different set of MCS configurations, is, as a part of the SPS configuration, associated with each SPS allocation during a DRX active period.

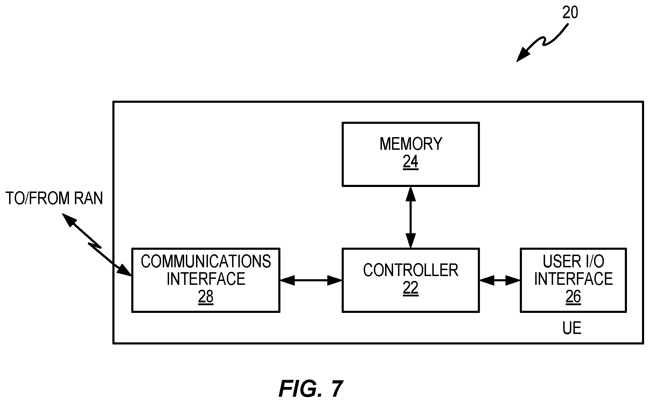

Figure 7 is a functional block diagram illustrating some components of an exemplary UE 20 configured to operate according to one or more embodiments of the present disclosure. As seen in Figure 7, UE 20 comprises a programmable controller 22, a memory 24, a user I/O interface 26, and a communications interface 28. The user I/O interface 26 provides the components necessary for a user to interact with the UE 20. The communications interface 28 comprises a transceiver that facilitates the communications with the eNBs 18 of the E-UTRAN (or the radio base stations of another type of Radio Access Network) over the appropriate air interface. In one embodiment, the communications interface 28 communicates signals and data with the eNBs 18 in accordance with the LTE standards. The memory 24 may comprise any solid state memory or computer readable media known in the art. Suitable examples of such media include, but are not limited to, ROM, DRAM, Flash, or a device capable of reading computer-readable media, such as optical or magnetic media.

The programmable controller 22 may be implemented by one or more microprocessors, hardware, firmware, or a combination thereof, and generally controls the operation and functions of the UE 20 according to the appropriate standards. Such operations and functions include, but are not limited to, communicating with the eNBs 18 as previously described in this application. In this regard, the programmable controller 22 may be configured to implement logic and instructions stored in memory 24 to perform the method of the present disclosure as previously described.

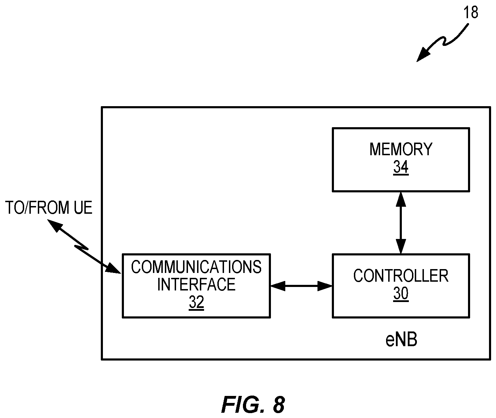

Figure 8 is a functional block diagram of some components of an exemplary eNB 18 (or other type of radio base station) configured according to one embodiment of the present disclosure. As shown in Figure 8, the eNB 18 comprises a programmable controller 30, a communications interface 32, and a memory 34. The communications interface 32 may, for example, comprise a transmitter and receiver configured to operate in an LTE system or other similar system. As is known in the art, the transmitter and receiver are coupled to one or more antennas (not shown) and communicate with the UE 20 over the LTE-based radio interface. Although not shown in Figure 8, the eNB 18 (or other type of radio base station) may also comprise another communications interface for communicating with other network nodes, such as an MME and/or a SGW of an EPS core network. Memory 34 may comprise any solid state memory or computer readable media known in the art. Suitable examples of such media include, but are not limited to, ROM, DRAM, Flash, or a device capable of reading computer-readable media, such as optical or magnetic media.

The programmable controller 30 controls the operation of the eNB 18 in accordance with the LTE standard (or in accordance with the standard of another cellular system). The functions of the controller 30 may be implemented by one or more microprocessors, hardware, firmware, or a combination thereof, and include performing the functions previously described. Thus, the controller 30 may be configured, according to logic and instructions stored in memory 34, to communicate with the UE 20, and to provide multiple uplink SPS allocations that may or may not be separated by short time gaps during a DRX active period using the method previously described.

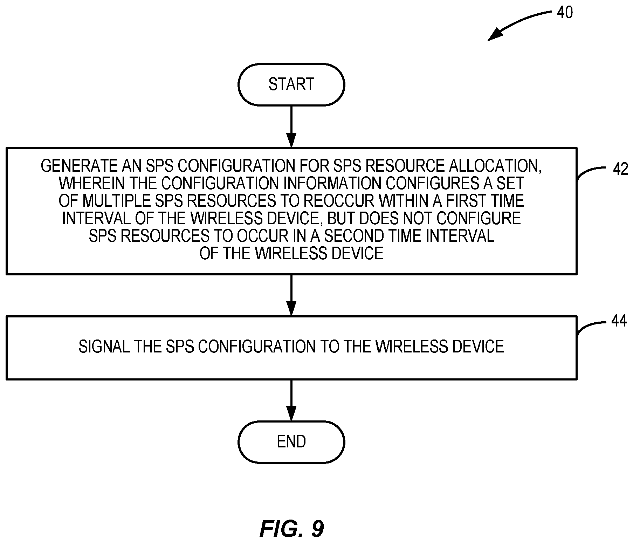

Figure 9 is a flow diagram illustrating a method 40 of configuring SPS resources to a wireless device according to one embodiment of the present disclosure. Method 40 is performed at a base station, such as eNB 18, for example, and begins with the eNB 18 generating an SPS configuration for SPS resource allocation to UE 20 (box 42). In this embodiment, the generated SPS configuration configures a set of multiple SPS resources to reoccur within a first reoccurring time interval of the UE 20, but does not configure SPS resources to occur in a second reoccurring time interval of the UE 20. Once generated, the eNB 18 signals the SPS configuration to the UE 20 (box 44).

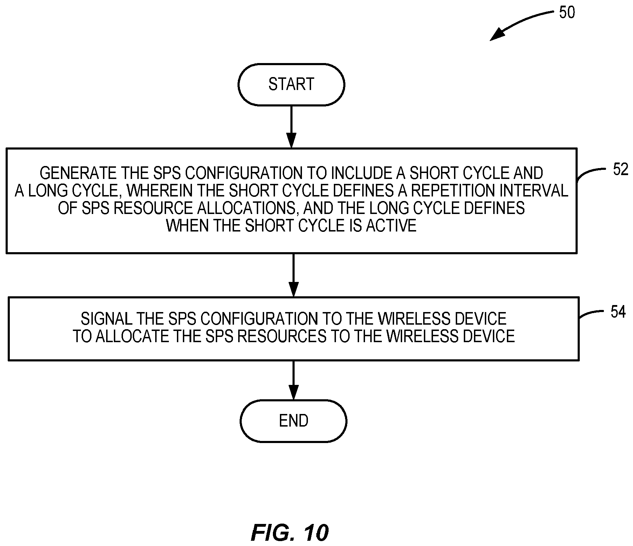

Figure 10 is a flow diagram illustrating a method 50 of configuring SPS resources to a wireless device according to one embodiment of the present disclosure. Method 50 is also performed at the eNB 18 and begins with the eNB generating the SPS configuration to include a short cycle and a long cycle (box 52). In this embodiment, the short cycle defines a repetition interval of SPS resource allocations, and the long cycle defines when the short cycle is active. Once generated, the eNB 18 then signals the SPS configuration to the UE 20 to allocate the SPS resources to the UE 20 (box 54).

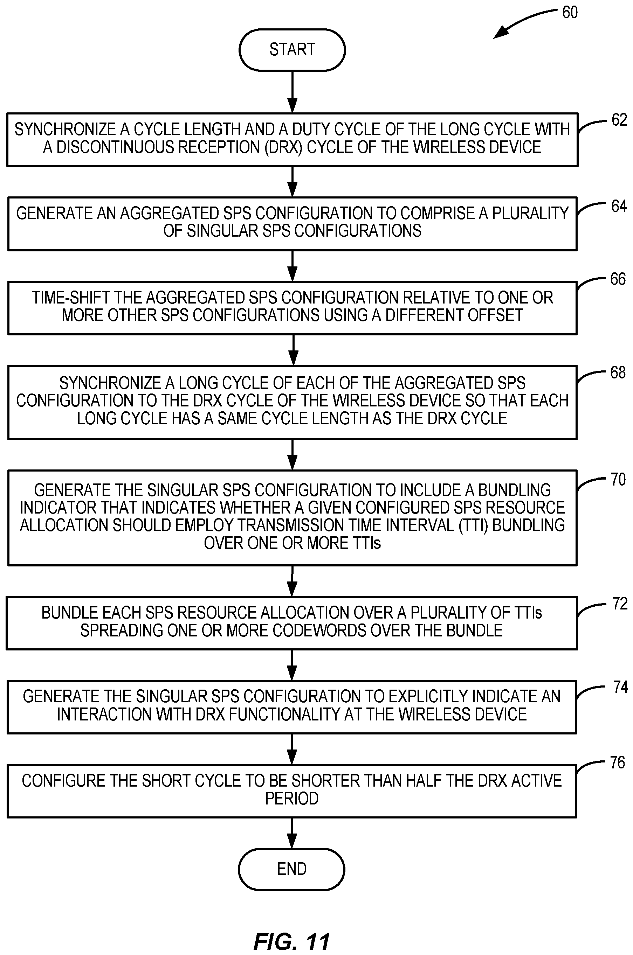

Figure 11 is a flow diagram illustrating a more detailed method 60 by which an eNB 18 may configure the SPS resources to a wireless device according to one embodiment of the present disclosure. Particularly, the eNB 18 may synchronize a cycle length and a duty cycle of the long cycle with a DRX cycle of the UE 20 (box 62). In embodiments where the SPS configuration comprises a singular SPS configuration, the eNB 18 may further generate an aggregated SPS configuration to comprise a plurality of singular SPS configurations (box 64), and time-shift the aggregated SPS configuration relative to one or more other SPS configurations using a different offset (box 66). In such embodiments, the eNB 18 may also synchronize a long cycle of each of the aggregated SPS configuration to the DRX cycle of the UE 20 so that each long cycle has the same cycle length as the DRX cycle (box 68).

Additionally, in embodiments where the eNB 18 generates a singular SPS configuration, the eNB 18 may generate the singular SPS configuration to include a bundling indicator (box 70). The bundling indicator indicates whether a given configured SPS resource allocation should employ Transmission Time Interval (TTI) bundling over one or more TTIs. Further, in one embodiment, the eNB 18 may bundle each SPS resource allocation over a plurality of TTIs spreading one or more codewords over the bundle (box 72). In such cases, each TTI may comprise a subframe and is allocated as a separate resource with one or more codewords.

In another embodiment, when the eNB 18 generates the singular SPS configuration, the eNB 18 may generate the singular SPS configuration to explicitly indicate an interaction with DRX functionality at the UE 20 (box 74), and configure the short cycle to be shorter than half the DRX active period (box 76).

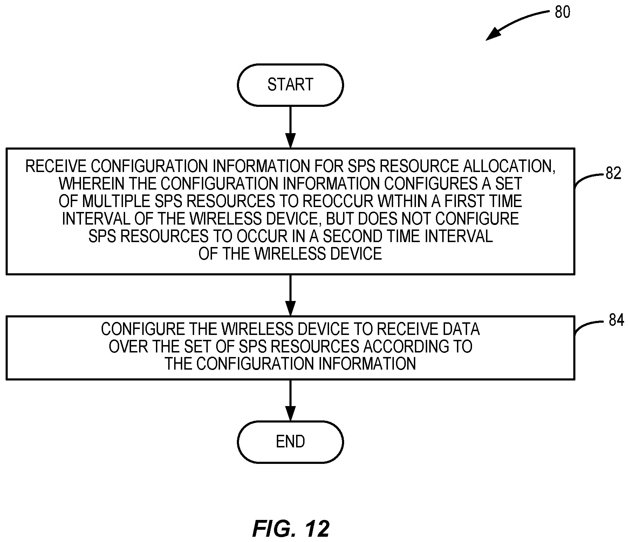

Figure 12 is a flow chart illustrating a method 80, performed at the UE 20, for receiving data over SPS resources in a wireless communication network. Method 80 begins with the UE 20 receiving configuration information for SPS resource allocation from the eNB 18 (box 82). In this embodiment, the configuration information configures a set of multiple SPS resources to reoccur within a first reoccurring time interval of the UE 20, but does not configure SPS resources to occur in a second reoccurring time interval of the UE 20. Once received, the UE 20 configures itself to receive or transmit data over the set of SPS resources according to the configuration information (box 84).

The present disclosure may, of course, be carried out in other ways than those specifically set forth herein without departing from essential characteristics of the disclosure. As such, the present embodiments are to be considered in all respects as illustrative and not restrictive, and all changes coming within the meaning and equivalency range of the appended claims are intended to be embraced therein.

### Abbreviations

- 3GPP: 3^{rd} Generation Partnership Project
- BSR: Buffer Status Report
- C-RNTI: Cell Radio Network Temporary Identifier
- DRX: Discontinuous Reception
- eNB: eNodeB
- eNodeB: E-UTRAN NodeB
- EPS: Evolved Packet System
- E-UTRAN: Evolved UTRAN
- HARQ: Hybrid Automatic Repeat reQuest
- HSPA: High Speed Packet Access
- HSS: Home Subscriber Server
- ID: Identity/Identifier
- IE: Information Element
- IP: Internet Protocol
- LTE: Long Term Evolution
- M2M: Machine-to-Machine
- MCS: Modulation and Coding Scheme
- MD: Machine Device
- MHz: Megahertz
- MIMO: Multiple Input Multiple Output
- MME: Mobility Management Entity
- MTC: Machine Type Communication
- NAS: Non Access Stratum
- PDCCH: Physical Downlink Control Channel
- RAT: Radio Access Technology
- RRC: Radio Resource Control
- S1: The interface between the radio access network and the Core network in EPS.
- S1AP: S1 Application Protocol (a protocol used between an eNB and an MME)
- SPID: Subscriber Profile Identifier
- SPS: Semi-Persistent Scheduling
- TTI: Transmission Time Interval
- UE: User Equipment
- UMTS: Universal Mobile Telecommunications System
- UTRAN: Universal Terrestrial Radio Access Network
- VoIP: Voice over IP
- WCDMA: Wideband Code Division Multiple Access

## Claims

1. A method for performing dense resource allocations for a User Equipment (UE) (20) using semi-persistent scheduling (SPS), the method performed at a base station (18) and comprising:
generating (52) an SPS configuration to include a short cycle and a long cycle, wherein the short cycle defines a repetition interval of multiple SPS resource allocations, and the long cycle defines when the short cycle is active; and
signaling (54) the SPS configuration to the UE to allocate the multiple SPS resources to the UE (20).

2. The method of claim 1 further comprising synchronizing (62) a cycle length and a duty cycle of the long cycle with a Discontinuous Reception (DRX) cycle of the UE (20).

3. The method of any of claims 1-2 wherein the SPS configuration comprises a singular SPS configuration, and wherein the method further comprises:
generating (64) an aggregated SPS configuration to comprise a plurality of singular SPS configurations; and
time-shifting (66) the aggregated SPS configuration relative to one or more other SPS configurations using a different offset.

4. The method of claim 3 further comprising synchronizing (68) a long cycle of each of the aggregated SPS configuration to the DRX cycle of the UE (20) so that each long cycle has a same cycle length as the DRX cycle.

5. The method of any of claims 1-4 wherein generating the singular SPS configuration further comprises generating (70) the singular SPS configuration to include a bundling indicator that indicates whether a given configured SPS resource allocation should employ Transmission Time Interval (TTI) bundling over one or more TTIs.

6. The method of any of claims 3-5 further comprising bundling (72) each SPS resource allocation over a plurality of TTIs spreading one or more codewords over the bundle.

7. A method for configuring Semi-Persistent Scheduling (SPS) resources to a wireless device (20) in a wireless communication network (10), the method being performed at a base station (18) and comprising:
generating (42) configuration information for SPS resource allocation, wherein the configuration information configures a set of multiple SPS resources to reoccur within a first reoccurring time interval of the wireless device (20), but does not configure SPS resources to occur in a second reoccurring time interval of the wireless device (20); and
signaling (44) the configuration information to the wireless device (20).

8. The method of claim 7 wherein the first time interval is shorter than the second time interval and wherein the configuration information indicates a first cycle that defines a period over which the set of SPS resources reoccurs and that is configured so that each reoccurring set of SPS resources occurs within the first time interval, and a second cycle defining a period over which the SPS resources reoccur in the set.

9. The method of any of claims 7-8 wherein the first time interval comprises a Discontinuous Reception (DRX) active period of the wireless device (20), and wherein the second time interval comprises a DRX inactive period of the wireless device (20).

10. The method of any of claims 7-9 wherein the configuration information indicates a SPS cycle defining a period over which the SPS resources reoccur, and whether the SPS resources are selectively suspended within the DRX inactive period of the wireless device (20).

11. A base station (18) comprising:
a communication interface (32) configured to communicate data with one or more wireless devices (20) in the wireless communication network (10); and
a controller (30) configured to:
generate configuration information for SPS resource allocation, the configuration information configuring a set of multiple SPS resources to reoccur within a first reoccurring time interval of the wireless device (20), but does not configure SPS resources to occur in a second reoccurring time interval of the wireless device (20); and
signal the configuration information to the wireless device (20) via the communication interface (32).

12. A method for receiving data over Semi-Persistent Scheduling (SPS) resources in a wireless communication network (10), the method performed at a wireless device (20) and comprising:
receiving (82) configuration information for SPS resource allocation, wherein the configuration information configures a set of multiple SPS resources to reoccur within a first reoccurring time interval of the wireless device (20), but does not configure SPS resources to occur in a second reoccurring time interval of the wireless device (20); and
configuring (84) the wireless device (20) to receive or transmit data over the set of SPS resources according to the configuration information.

13. The method of claim 12 wherein the first time interval is shorter than the second time interval, and wherein the configuration information indicates a first cycle that defines a first period over which the set of SPS resources reoccurs and that that is configured so that each reoccurring set of SPS resources occurs within the first time interval, and a second cycle that defines a second period over which the SPS resources reoccur in the set.

14. The method of any of claims 12-13 wherein the first time interval comprises a Discontinuous Reception (DRX) active period of the wireless device (20), and the second time interval comprises a DRX inactive period of the wireless device (20).

15. A wireless device (20) comprising:
a transceiver (28) configured to receive configuration information for SPS resource allocation from a base station (18), the configuration information configuring a set of multiple SPS resources to reoccur within a first reoccurring time interval of the wireless device (20), but not to occur in a second reoccurring time interval of the wireless device (20); and
a controller (22) configured to configure the wireless device (20) to receive or transmit data over the set of SPS resources according to the configuration information.

## Patentansprüche

1. Verfahren zum Durchführen dichter Ressourcenzuweisungen für eine Benutzereinrichtung (UE) (20) unter Verwendung von semipersistenter Planung (SPS), wobei das Verfahren an einer Basisstation (18) durchgeführt wird und Folgendes umfasst:
Erzeugen (52) einer SPS-Konfiguration, um einen kurzen Zyklus und einen langen Zyklus einzuschließen, wobei der kurze Zyklus ein Wiederholungsintervall mehrerer SPS-Ressourcenzuweisungen definiert und der lange Zyklus definiert, wann der kurze Zyklus aktiv ist; und
Signalisieren (54) der SPS-Konfiguration an die UE, um die mehreren SPS-Ressourcen der UE (20) zuzuweisen.

2. Verfahren nach Anspruch 1, ferner umfassend das Synchronisieren (62) einer Zykluslänge und eines Tastverhältnisses des langen Zyklus mit einem diskontinuierlichen Empfangszyklus (DRX-Zyklus) der UE (20).

3. Verfahren nach einem der Ansprüche 1 bis 2, wobei die SPS-Konfiguration eine singuläre SPS-Konfiguration umfasst, und wobei das Verfahren ferner Folgendes umfasst:
Erzeugen (64) einer aggregierten SPS-Konfiguration, so dass sie eine Vielzahl von singulären SPS-Konfigurationen umfasst; und
zeitliches Verschieben (66) der aggregierten SPS-Konfiguration in Bezug auf eine oder mehrere andere SPS-Konfigurationen unter Verwendung eines anderen Versatzes.

4. Verfahren nach Anspruch 3, ferner umfassend das Synchronisieren (68) eines langen Zyklus jeder der aggregierten SPS-Konfigurationen mit dem DRX-Zyklus der UE (20), so dass jeder lange Zyklus die gleiche Zykluslänge wie der DRX-Zyklus hat.

5. Verfahren nach einem der Ansprüche 1 bis 4, wobei das Erzeugen der singulären SPS-Konfiguration ferner das Erzeugen (70) der singulären SPS-Konfiguration umfasst, um einen Bündelungsindikator einzuschließen, der angibt, ob eine gegebene konfigurierte SPS-Ressourcenzuweisung eine Übertragungszeitintervallbündelung (TTI-Bündelung) über ein oder mehrere TTIs verwenden sollte.

6. Verfahren nach einem der Ansprüche 3 bis 5, ferner umfassend das Bündeln (72) jeder SPS-Ressourcenzuweisung über eine Vielzahl von TTIs, die ein oder mehrere Codewörter über das Bündel verbreiten.

7. Verfahren zum Konfigurieren von semipersistenten Planungsressourcen (SPS-Ressourcen) auf eine drahtlose Vorrichtung (20) in einem drahtlosen Kommunikationsnetz (10), wobei das Verfahren an einer Basisstation (18) durchgeführt wird und Folgendes umfasst:
Erzeugen (42) von Konfigurationsinformationen zur SPS-Ressourcenzuweisung, wobei die Konfigurationsinformationen einen Satz mehrerer SPS-Ressourcen konfigurieren, um innerhalb eines ersten wiederkehrenden Zeitintervalls der drahtlosen Vorrichtung (20) wieder aufzutreten, aber keine SPS-Ressourcen konfigurieren, die in einem zweiten wiederkehrenden Zeitintervall der drahtlosen Vorrichtung (20) auftreten; und
Senden (44) der Konfigurationsinformationen an die drahtlose Vorrichtung (20).

8. Verfahren nach Anspruch 7, wobei das erste Zeitintervall kürzer ist als das zweite Zeitintervall, und wobei die Konfiguration von Informationen einen ersten Zyklus angibt, der einen Zeitraum definiert, über den der Satz von SPS-Ressourcen wiederkehrt, und der so konfiguriert ist, dass jeder wiederkehrende Satz von SPS-Ressourcen innerhalb des ersten Zeitintervalls auftritt, und einen zweiten Zyklus, der einen Zeitraum definiert, über den die SPS-Ressourcen in dem Satz wiederkehren.

9. Verfahren nach einem der Ansprüche 7 bis 8, wobei das erste Zeitintervall einen aktiven Zeitraum eines diskontinuierlichen Empfangs (DRX) der drahtlosen Vorrichtung (20) umfasst, und wobei das zweite Zeitintervall einen DRX-inaktiven Zeitraum der drahtlosen Vorrichtung (20) umfasst.

10. Verfahren nach einem der Ansprüche 7 bis 9, wobei die Konfigurationsinformationen einen SPS-Zyklus angeben, der einen Zeitraum definiert, über den SPS-Ressourcen wiederkehren, und angeben, ob die SPS-Ressourcen im DRX-inaktiven Zeitraum der drahtlosen Vorrichtung (20) selektiv suspendiert sind.

11. Basisstation (18), die Folgendes umfasst:
eine Kommunikationsschnittstelle (32), die konfiguriert ist zum Kommunizieren von Daten mit einer oder mehreren drahtlosen Vorrichtungen (20) im drahtlosen Kommunikationsnetz (10); und
eine Steuerung (30), die konfiguriert ist zum:
Erzeugen von Konfigurationsinformationen zur SPS-Ressourcenzuweisung, wobei die Konfigurationsinformationen einen Satz mehrerer SPS-Ressourcen konfigurieren, um innerhalb eines ersten wiederkehrenden Zeitintervalls der drahtlosen Vorrichtung (20) wieder aufzutreten, aber keine SPS-Ressourcen konfigurieren, die in einem zweiten wiederkehrenden Zeitintervall der drahtlosen Vorrichtung (20) auftreten; und
Signalisieren der Konfigurationsinformationen über die Kommunikationsschnittstelle (32) an die drahtlose Vorrichtung (20) .

12. Verfahren zum Empfangen von Daten über semipersistente Planungsressourcen (SPS-Ressourcen) in einem drahtlosen Kommunikationsnetz (10), wobei das Verfahren an einer drahtlosen Vorrichtung (20) durchgeführt wird und Folgendes umfasst:
Empfangen (82) von Konfigurationsinformationen zur SPS-Ressourcenzuweisung, wobei die Konfigurationsinformationen einen Satz mehrerer SPS-Ressourcen konfigurieren, um innerhalb eines ersten wiederkehrenden Zeitintervalls der drahtlosen Vorrichtung (20) wieder aufzutreten, aber keine SPS-Ressourcen konfigurieren, die in einem zweiten wiederkehrenden Zeitintervall der drahtlosen Vorrichtung (20) auftreten; und
Konfigurieren (84) der drahtlosen Vorrichtung (20) zum Empfangen oder Übertragen von Daten über den Satz von SPS-Ressourcen gemäß der Konfigurationsinformationen.

13. Verfahren nach Anspruch 12, wobei das erste Zeitintervall kürzer ist als das zweite Zeitintervall, und wobei die Konfiguration von Informationen einen ersten Zyklus angibt, der einen ersten Zeitraum definiert, über den der Satz von SPS-Ressourcen wiederkehrt, und der so konfiguriert ist, dass jeder wiederkehrende Satz von SPS-Ressourcen innerhalb des ersten Zeitintervalls auftritt, und einen zweiten Zyklus, der einen zweiten Zeitraum definiert, über den die SPS-Ressourcen in dem Satz wiederkehren.

14. Verfahren nach einem der Ansprüche 12 bis 13, wobei das erste Zeitintervall einen aktiven Zeitraum eines diskontinuierlichen Empfangs (DRX) der drahtlosen Vorrichtung (20) umfasst, und wobei das zweite Zeitintervall einen DRX-inaktiven Zeitraum der drahtlosen Vorrichtung (20) umfasst.

15. Drahtlose Vorrichtung (20), umfassend:
einen Sender-Empfänger (28), der konfiguriert ist, um Konfigurationsinformationen für SPS-Ressourcenzuweisung von einer Basisstation (18) zu empfangen, wobei die Konfigurationsinformationen einen Satz mehrerer SPS-Ressourcen konfigurieren, um innerhalb eines ersten wiederkehrenden Zeitintervalls der drahtlosen Vorrichtung (20) erneut aufzutreten, aber nicht in einem zweiten wiederkehrenden Zeitintervall der drahtlosen Vorrichtung (20) aufzutreten; und
Steuerung (22), die konfiguriert ist zum Konfigurieren der drahtlosen Vorrichtung (20) zum Empfangen oder Übertragen von Daten über den Satz von SPS-Ressourcen gemäß der Konfigurationsinformationen.

## Revendications

1. Procédé pour mettre en oeuvre des allocations de ressources denses pour un équipement utilisateur (UE) (20) en utilisant une planification semi-permanente (SPS), le procédé mis en oeuvre au niveau d'une station de base (18) et comprenant :
la génération (52) d'une configuration SPS pour inclure un cycle court et un cycle long, dans lequel le cycle court définit un intervalle de répétition de multiples allocations de ressources SPS, et le cycle long définit lorsque le cycle court est actif ; et
la signalisation (54) de la configuration SPS à l'UE pour allouer les multiples ressources SPS à l'UE (20).

2. Procédé selon la revendication 1 comprenant en outre la synchronisation (62) d'une longueur de cycle et d'un cycle de service du cycle long avec un cycle de réception discontinue (DRX) de l'UE (20).

3. Procédé selon l'une quelconque des revendications 1 ou 2 dans lequel la configuration SPS comprend une configuration SPS unique, et dans lequel le procédé comprend en outre :
la génération (64) d'une configuration SPS agrégée pour comprendre une pluralité de configurations SPS uniques ; et
le décalage temporel (66) de la configuration SPS agrégée par rapport à une ou plusieurs autres configurations SPS en utilisant un décalage différent.

4. Procédé selon la revendication 3 comprenant en outre la synchronisation (68) d'un cycle long de chacune parmi la configuration SPS agrégée au cycle DRX de l'UE (20) de sorte que chaque cycle long a une même longueur de cycle que le cycle DRX.

5. Procédé selon l'une quelconque des revendications 1 à 4 dans lequel la génération de la configuration SPS unique comprend en outre la génération (70) de la configuration SPS unique pour inclure un indicateur de regroupement qui indique si une allocation de ressources SPS configurée donnée doit faire appel à regroupement d'intervalles de temps de transmission (TTI) sur un ou plusieurs TTI.

6. Procédé selon l'une quelconque des revendications 3 à 5 comprenant en outre le regroupement (72) de chaque allocation de ressources SPS sur une pluralité de TTI s'étendant sur un ou plusieurs mots codés sur le regroupement.

7. Procédé pour configurer des ressources de planification semi-permanente (SPS) vers un dispositif sans fil (20) dans un réseau de communication sans fil (10), le procédé étant mis en oeuvre au niveau d'une station de base (18) et comprenant :
la génération (42) d'informations de configuration pour une allocation de ressources SPS, dans lequel les informations de configuration configurent un ensemble de multiples ressources SPS pour réapparaître au sein d'un premier intervalle de temps de réapparition du dispositif sans fil (20), mais ne configurent pas les ressources SPS pour se produire dans un deuxième intervalle de temps de réapparition du dispositif sans fil (20) ; et
la signalisation (44) des informations de configuration au dispositif sans fil (20).

8. Procédé selon la revendication 7 dans lequel le premier intervalle de temps est plus court que le deuxième intervalle de temps et dans lequel les informations de configuration indiquent un premier cycle qui définit une période sur laquelle l'ensemble de ressources SPS réapparaît et qui est configuré de sorte que chaque ensemble de ressources SPS réapparaissant se produit au sein du premier intervalle de temps, et un deuxième cycle définissant une période sur laquelle les ressources SPS réapparaissent dans l'ensemble.

9. Procédé selon l'une quelconque des revendications 7 ou 8 dans lequel le premier intervalle de temps comprend une période active de réception discontinue (DRX) du dispositif sans fil (20), et dans lequel le deuxième intervalle de temps comprend une période inactive DRX du dispositif sans fil (20).

10. Procédé selon l'une quelconque des revendications 7 à 9 dans lequel les informations de configuration indiquent un cycle SPS définissant une période sur laquelle les ressources SPS réapparaissent, et si les ressources SPS sont sélectivement suspendues au sein de la période inactive DRX du dispositif sans fil (20).

11. Station de base (18) comprenant :
une interface de communication (32) configurée pour communiquer des données avec un ou plusieurs dispositifs sans fil (20) dans le réseau de communication sans fil (10) ; et
un contrôleur (30) configuré pour :
générer des informations de configuration pour une allocation de ressources SPS, les informations de configuration configurant un ensemble de multiples ressources SPS pour réapparaître au sein d'un premier intervalle de temps de réapparition du dispositif sans fil (20), mais ne configurent pas les ressources SPS pour se produire dans un deuxième intervalle de temps de réapparition du dispositif sans fil (20) ; et
signaler les informations de configuration au dispositif sans fil (20) via l'interface de communication (32).

12. Procédé pour recevoir des données sur des ressources de planification semi-permanente (SPS) dans un réseau de communication sans fil (10), le procédé mis en oeuvre au niveau d'un dispositif sans fil (20) et comprenant :
la réception (82) d'informations de configuration pour une allocation de ressources SPS, dans lequel les informations de configuration configurent un ensemble de multiples ressources SPS pour réapparaître au sein d'un premier intervalle de temps de réapparition du dispositif sans fil (20), mais ne configurent pas les ressources SPS pour se produire dans un deuxième intervalle de temps de réapparition du dispositif sans fil (20) ; et
la configuration (84) du dispositif sans fil (20) pour recevoir ou transmettre des données sur l'ensemble de ressources SPS selon les informations de configuration.

13. Procédé selon la revendication 12 dans lequel le premier intervalle de temps est plus court que le deuxième intervalle de temps, et dans lequel les informations de configuration indiquent un premier cycle qui définit une première période sur laquelle l'ensemble de ressources SPS réapparaît et qui est configuré de sorte que chaque ensemble de ressources SPS réapparaissant se produit au sein du premier intervalle de temps, et un deuxième cycle qui définit une deuxième période sur laquelle les ressources SPS réapparaissent dans l'ensemble.

14. Procédé selon l'une quelconque des revendications 12 ou 13 dans lequel le premier intervalle de temps comprend une période active de réception discontinue (DRX) du dispositif sans fil (20), et le deuxième intervalle de temps comprend une période inactive DRX du dispositif sans fil (20).

15. Dispositif sans fil (20) comprenant :
un émetteur-récepteur (28) configuré pour recevoir des informations de configuration pour une allocation de ressources SPS depuis une station de base (18), les informations de configuration configurant un ensemble de multiples ressources SPS pour réapparaître au sein d'un premier intervalle de temps de réapparition du dispositif sans fil (20), mais pour ne pas se produire dans un deuxième intervalle de temps de réapparition du dispositif sans fil (20) ; et
un contrôleur (22) configuré pour configurer le dispositif sans fil (20) pour recevoir ou transmettre des données sur l'ensemble de ressources SPS selon les informations de configuration.
